# EUROPEAN PATENT APPLICATION

(11) **EP 0 795 595 A1**
(43) Date of publication of application: **17.09.1997**
(21) Application number: 97830012.7
(22) Date of filing: 17.01.1997
(51) Int. Cl.: C10J 3/66

(54) **A method for processing industrial liquid and solid waste material**

(30) Priority: 19.01.1996 IT RM960037
(71) Applicant: TEXAS INSTRUMENTS INC., Dallas, Texas 75243 (US); TEXAS INSTRUMENTS ITALIA S.p.A., 67051 Avezzano (AQ) (IT)
(72) Inventor: Ceglie, Giovanni, Avezzano (AQ) (IT); Russomanno, Francesco, 00100 Roma (IT)
(74) Representative: Taliercio, Antonio

(57) **Abstract**

A process is described to obtain synthesis gas from industrial solid and liquid wastes having a high content of volatile material, comprising the following steps:
- reducing the sizes of crushed solid wastes to values not greater than 20 cm,
- pyrolysing (10) said wastes at a temperature between 350°C and 550°C and discharging the solid residuals,
- delivering the hot gases produced during said pyrolysis step to a gasification reactor (12) which is supplied with oxygen or with oxygen enriched air and possibly with steam,
- removing any HCl and/or NH₃ and/or H₂S contained in the gaseous mixture.

## Description

This invention relates to the broad field of the methods for processing industrial solid and liquid waste materials and, more particularly, it relates to a process for obtaining synthesis gases from solid and liquid industrial waste materials having a high content of volatile substances.

This invention specifically relates to processing industrial waste materials having a fixed carbon content lower than 10% by weight based upon the dry material content and a calorific power not lower and possibly higher than 5000 kCal/kg of dry material, such as plastic material containers, various paper containing waste materials, wood and plastic material residuals, scraps of plastic materials and solvents. The above mentioned exemplary waste materials are the most frequently encountered in the common industrial practice and in respect of which major studies have been carried out in connection with their treatment.

Such waste materials, according to the state of the art, are gasifiable in single stage fluidized bed gasifiers. In the first place, such a treatment requires a first step in which their solid content is ground, and/or chopped, so as to obtain a mean particle size not greater than 2 cm. In the second place, such treatment requires a high temperature gasification stage, in which the whole waste material charge and all reagents needed for gasification are brought to a temperature not lower than 850°C.

In addition to said expensive mechanical chopping and/or grinding steps of the solid fraction of said waste materials up to said particle size value and in addition to the requirement that the whole charge and the reagents needed for gasification be heated to a temperature not lower than 850°C, the implementation of the prior art method entails formation of tar like condensates, when the temperature of the gasification apparatus is maintained below 1000°C, in order to avoid softening or melting effects in the inert substances contained in the concerned waste materials.

Furthermore, the gasification methods of the prior art are based upon adoption of a cumbersome gasification reactor which is hard to operate. Provisions are to be adopted for discharging the inert substances (contained in the waste materials) in molten or agglomerated form in all those cases where, in order to avoid formation of tar like condensates, as above mentioned, the temperature is maintained above 1000°C.

Lastly, it should be remarked that the apparatuses according to the prior art should also incorporate a complex and expensive system for intercepting and blocking any entrained particulate material.

Having all above discussed prior art in mind, it is an object of this invention to provide a process for obtaining synthesis gas from industrial waste materials having a high content of volatile substances.The (solid and/or liquid) charge does not require reduction to a very small particle size but, oppositely, it can be pre-treated so as to reduce the mean particle size of its solid fraction even to values not higher than 20 cm.

It is a further object of this invention to provide a process in which, in the pyrolysis stage, the material charge can be heated, without addition of further reagents, to a temperature not higher than 550°C. At the end of the pyrolysis reactor, the not-pyrolysed solid material, that incorporates the charge fixed carbon and any inert substance contained in the charge material itself, is discharged in granulated form or in the form of a solid not melted and agglomerated dust.

It is an additional object of this invention to provide a process as above specified, in whicch the subsequent gasification of the devolatilized material is effected at a temperature between 1200 and 1400°C, so as to avoid formation of tar like condensates during the subsequent cooling step of the produced synthesis gas.

It is, therefore, specific object of this invention to achieve the above outlined objectives. In particular, the invention relates to a process for obtaining synthesis gas from solid and liquid industrial waste materials having a high content of volatile substances, substantially comprising the following steps: - pre-treating the solid fraction of said industrial waste materials so as to reduce their maximum particle sizes preferably to values not higher than 20 cm; - pyrolysing the material charge with said particle sizes preferably in a horizontal reactor at a pressure near to the atmospheric pressure and at a preferred temperature between 350 and 550°C, any non-pyrolysed solid material being discharged at the end of the pyrolysis reactor; - gasifying the devolatilised material preferably with a comburant (air or oxygen or oxygen enriched air) and possibly with water or steam at a preferred pressure near to the atmospheric pressure and at a preferred temperature between 1200 and 1400°C; - cooling the so produced synthesis gas and removing any condensed water; - removing any acidic or alkaline component (HCI and/or NH₃ and/or H₂S) contained in the so produced gas.

The present invention will now be further described, by way of example , with reference to the accompanying drawing, in which:

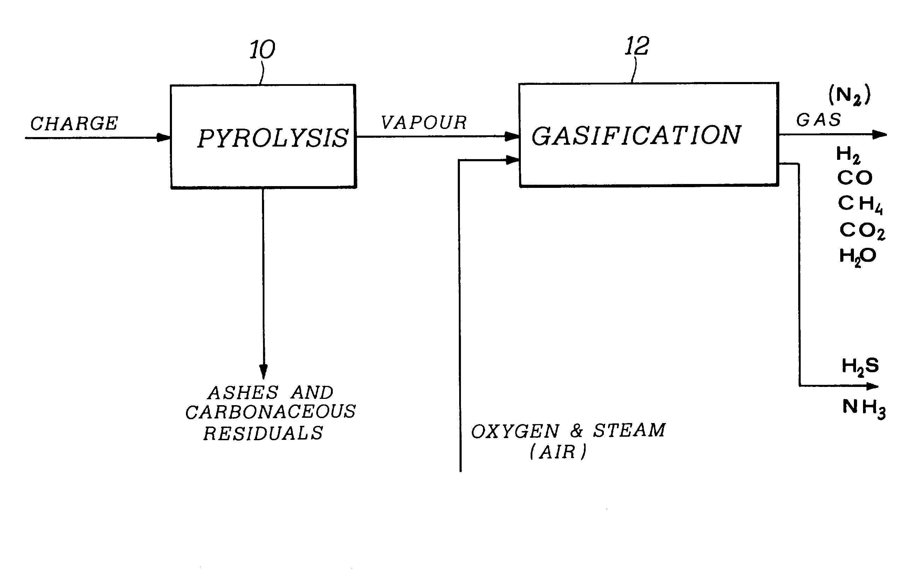

Figure 1 shows a block diagram of the process of the invention.

In Figure 1, the two basic pyrolysis 10 and gasification 12 blocks can be observed.

Before being supplied to the pyrolysis reactor 10, the solid fraction of the waste material charge is subjected to a preliminary reduction treatment, wherein the mean particle size is reduced to values not higher than 20 cm, such mean particle size value being noticeably higher and, therefore, much less expensive than the mean particle size of the prior art.

Regardless of the mean particle size, the material charge should preferably be characterized by a fixed carbon content lower than 20% by weight based upon the weight of the dry waste material, as well as by a calorific power higher than 5000 kCal/kg of the dry waste material.

In the horizontal pyrolysis reactor 10, the pre-treated material charge is subjected to a pressure near to the atmospheric pressure and to a temperature between 350 and 550°C, any not devolatilized solid material, together with ashes and carbon like residuals being discharged at the end of the reactor.

The devolatilized material is subsequently gasified in a homogeneous phase, to the maximum possible extend adiabatic, gasification reactor 12 with a comburant (air or oxygen or oxygen enriched air) and, if proper, with water or steam, at a pressure near to the atmospheric pressure and at a temperature between 1200 and 1400°C.

Lastly, the so produced synthesis gas is cooled and further steps are carried out to remove any condensed water therefrom, as well as to remove any HCI and/or NH₃ and/or H₂S contained in the resulting gas product.

As above mentioned, the material charge should preferably be characterized by a content of fixed carbon lower than 10% by weight based upon the weight of the dry waste material and by a calorific power higher than 5000 kCal/kg of the dry waste material.

The residence time in the pyrolysis stage 10 is preferably between 10 and 60 minutes.

The oxygen content of the comburant supplied to the gasification reactor 12 should preferably be between 50% and 100% by weight of the devolatilized material supplied to the gasification reactor 12.

An advantage of this invention is to be located in that any heating step in the pyrolysis reactor 10 as well as in the gasification reactor 12 can be effected by utilizing the combustible fraction of the pyrolysis residuals and a portion of the synthesis product gas, respectively.

The preferred embodiment of this invention has been hereinbefore explained and some variations have been suggested, but it should be understood that those skilled in the art can make further variations and changes therein without departing from the scope of this invention.

## Claims

1. A process for obtaining synthesis gas from solid and liquid industrial waste materials having a high content of volatile substances, substantially comprising the following steps:
- pre-treating the solid fraction of said industrial waste materials so as to reduce their maximum particle size;
- pyrolysing the material charge with said particle sizes in a horizontal reactor (10) at a pressure near to the atmospheric pressure, any non-pyrolysed solid material being discharged at the end of the pyrolysis reactor (10);
- gasifying the devolatilised material with a comburant at a pressure near to the atmospheric pressure;
- cooling the so produced synthesis gas and removing any condensed water;
- substantially removing the acidic or alkaline component (HCI and/or NH₃ and/or H₂S) contained in the so produced gas.

2. The process according to claim 1, wherein said pre-treating step comprises reducing the maximum particle size to a value not greater than 20 cm.

3. The process according to claim 1 or claim 2, further comprising performing said pyrolysing step at a temperature between 350°C and 550°C.

4. The process according to any preceding claim, further comprising performing said gasifying step with a comburant comprising air, oxygen or oxygen enriched air.

5. The process according to any preceding claim, further comprisig performing said gasifying step with water or steam.

6. The process according to any preceding claim, further comprising performing said gasifying step at a temperature between 1200°C and 1400°C.

7. The process according to any preceding claim, wherein the step of removing the acidic or alkaline components comprises removing HCI, NH₃ or H₂S.

8. The process according to any preceding claim, wherein the gasification step is carried out in a homogeneous phase, in an adiabatic gasification reactor, by means of a comburant comprising air or oxygen or oxygen enriched air.

9. The process according to any preceding claim, wherein said pre-treating step comprises pre-treating the solid and liquid industrial waste materials having a calorific power higher than 5000 kCal/kg of dry waste material and a content of fixed carbon lower than 10% by weight of the dry waste material.

10. The process according to any one of the preceding claims, wherein the heating step of the pyrolysis reactor is effected by utilizing the combustible fraction of the pyrolysis residuals.

11. The process according to any one of the preceding claims, wherein the heating step of the gasification reactor is effected by utilizing a portion of the synthesis product gas.

12. The process according to any preceding claim, wherein the gasification step utilizes water along with said comburant.

13. The process according to any preceding claim, wherein the gasification step utilizes steam along with said comburant.
